# EUROPEAN PATENT SPECIFICATION

(11) **EP 1 345 377 B1**
(45) Date of publication and mention of the grant of the patent: **20.07.2005**
(21) Application number: 02251801.3
(22) Date of filing: 13.03.2002
(51) Int. Cl.: H04L 29/06, H04L 12/56

(54) **Method for scheduling of file transfers for wireless networks**
Verfahren zur Planung der Dateifernübertragung für drahtlose Netzwerke
Méthode de planification du transfert de fichiers sur un réseau sans fil

(43) Date of publication of application: 17.09.2003
(73) Proprietor: LUCENT TECHNOLOGIES INC., Murray Hill, New Jersey 07974-0636 (US)
(72) Inventor: Gruhl, Stefan, 90443 Nuremberg (DE); Reichenbach, Joerg A., 90402 Nuremberg (DE); Sollner, Michael, 91058 Erlangen (DE)
(74) Representative: Sarup, David Alexander

(56) References cited:
- WO-A-00/51372
- WO-A-01/71521
- US-A- 4 642 758
- FLOYD S ET AL: "RANDOM EARLY DETECTION GATEWAYS FOR CONGESTION AVOIDANCE" IEEE / ACM TRANSACTIONS ON NETWORKING, IEEE INC. NEW YORK, US, vol. 1, no. 4, 1 August 1993 (1993-08-01), pages 397-413, XP000415363 ISSN: 1063-6692

## Description

The invention relates to a method according to claim 1. More particularly the invention addresses the problem of an efficient scheduling of file transfers from a fixed network to mobile terminals via a wireless network.

There is an increasing demand for transmission of data or data packages between users linked to various networks. Especially an increasing number of the mobile phone users intend to use wireless enabled personal digital assistants (PDA) to connect to networks like the Internet. Lacking a fixed Internet connection such a user decides to download data, e.g. music, information and the like into his PDA. In many cases the download time is not negligible, but mainly depends on the amount and format of the data to be transferred.

However, if several downloads of this kind are asked for in parallel, as a consequence thereof a full load of the radio cells of the wireless network involved may happen. This is either slowing down the transfer or stopping the transfer. In the worst case a disruption of the transfer may occur.

Today similar phenomena are already experienced during "busy-hours" for voice traffic, where a radio cell of a wireless network is fully loaded due to extensive requests for transmissions. This is likely to take place for data traffic as well. So called "busy-hour" period typically lasts for a period of several hours and typically occurs between one and three times a day.

It is a matter of fact, that during the remaining time the radio cell is not continuously loaded. Thus the present scheduling or time management of data transfers are highly ineffective, since during a major time period the remaining capacity available is not used.

However, some services require a lot of bandwidth and therefore have a strong impact on network congestion state. Such a service is a transfer of one or more files from a server in the fixed network, like an intranet or the Internet. Some of these file transfers, described as downloads by an artisan, have no tight time constraints or rather low time constraints.

In particular in a state of the art download a direct connection is established between a sender and receiver. Typically a download is performed by way of a certain file-transfer protocol (FTP). At present in a current network different data transfers are competing to use the available network resources, i.e. bandwidth. In spite of the fact, that different demands have a different priority concerning the execution time, there is no time-based transfer-management provided up to now. Although there are time critical applications like real time traffic and less critical applications such as downloads, currently the problem of time-based priority management is not addressed at all.

Also an alternative solution as establishing some quality of service (QoS) scheduling mechanisms in order to give downloads little priority to have minimized side effects on other more important real-time traffic so far has been used. During network congestion this results in long transmission delays for those data packets not being time critical.

Finally these downloads may even be interrupted due to time-out errors in times of strong congestion. This will lead to repeated requests, which of course makes the situation even worse.

It is therefore the object of the invention to provide a mechanism to perform data transfers during a time period which guarantees a stable and reliable transfer on both networks involved.

It is known from International (P.C.T.) patent publication W0 00/51372 to provide a method for scheduling information transfers between an accessible local element linked to a wireless network and a fixed network comprising the following steps:
- directing an information request from the local element to an operating unit interfacing the wireless network and the fixed network
- storing the request in the operating unit
- executing the request depending on a congestion state of the wireless network.

The present invention is characterized over the disclosure of W0 00/51372 in that congestion information is collected either from all radio cells of the wireless network or from radio cells of the wireless network from which the request was obtained, and the operating unit periodically collects location information of the local element waiting for the requested information.

The invention is attended by the advantage that file transfers can be performed during off-peak times without any loss of convenience. Both the telecommunications operator and the users benefit from the present invention. Advantageously the invention is also suited to utilize spare system capacity during non-busy-hours. Also the inventive apparatus and the inventive method are suited to avoid heavy congestion situations during busy-hours.

Finally the inventive concept offers a convenient download alternative for many applications where extensive but not time-critical downloads are involved.

Still a further advantage of the present invention is based on an improved reliability of the execution of requests. Inventively treated requests e.g. downloads performed at off-peak hours are less likely to suffer from interruptions.

The inventive method for scheduling information transfers between accessible local elements linked to a wireless network and a fixed network comprises the following steps. Directing information requests from the local elements to an operating unit interfacing the wireless network and the fixed network, storing the request in the operating unit and executing the request when the congestion in the wireless network is low, allowing an undisturbed transfer.

According to the invention the request can also include a time limitation for the execution. Depending on the actual execution time evaluated by the operating unit the request may either immediately be executed in a conventional way including the submission to the fixed network and transferring the obtained data directly to the mobile terminal. If the actual execution time is below the time limitation the request is executed when a low congestion of the mobile network is given, as described above. The invention also reveals an apparatus for scheduling file transfers between at least one element linked to a wireless network and at least one server unit of a fixed network. The apparatus comprises at least one receiving and at least one sending device for connecting to the wireless network and/or the fixed network, a storing device for storing a request obtained from the element linked to the wireless network and/or for storing data obtained by the at least one receiving device from the fixed network. The apparatus also provides a monitoring device for periodically monitoring the congestion state of the wireless network. Furthermore a processing unit adapted to access data according to the request from the fixed network and to return said data to the wireless network is part of the inventive apparatus. Thereby the processing unit initiates said return in response to the signal of the monitoring device.

Advantageous developments are specified in the subclaims.

Furthermore it is possible that the step of executing the request includes directing the request to the fixed network for operation, and depending on the congestion state in the wireless network returning the information according to the request obtained from the fixed network to the wireless network.

In another method according to the invention the information obtained from the fixed network is stored in the operating unit before it will be returned to the local element in the wireless network. Due to buffering of download data in the download center interruptions during downloads from the fixed network are not directly affecting the user. Broken requests or data downloads can as well be resumed.

With advantage the incoming request from the local element can also be stored in the operating unit before it will be operated any further. Preferably the operating unit sends the request to the fixed network, when a disturbance is unlikely.

The operating unit also periodically collects information on the congestion state of the wireless network and/or location information of the local element waiting for the processed request. Furthermore it is within the inventive concept to obtain congestion information from all radio cells of the wireless network.

Another preferred embodiment of the present invention is characterized in that the information according to request obtained from the fixed network is returned to the local element when the congestion state is below a value allowing an undisturbed data transfer. This value can be preset within the operating unit.

According to the invention identification information concerning the mobile terminal is sent to the operating unit together with the request. The identification can contain an identification of the mobile terminal, a transfer protocol address for the requested data, a specification number for the request and a time-limit information data. Still further an authentication can go along with the request.

In a particularly advantageous way the transfer to the wireless network is initiated, when the congestion of the radio cells is low. According to the present invention, it is ensured that downloads as well as similar traffic without tight timing restrictions are shifted out of the busy hours.

The apparatus according to the invention is adapted for downloading of data from an intranet or the internet to a mobile terminal in a wireless network. In a further embodiment of the present invention the operating unit can be combined with a gateway to the internet.

The invention is explained below in more detail with the aid of an exemplary embodiment in conjunction with the accompanying drawings, in which:
Figure 1 depicts an exemplary architecture of an embodiment of the present invention,
Figure 2 a communication protocol according to the present invention given as message-sequence-chart.

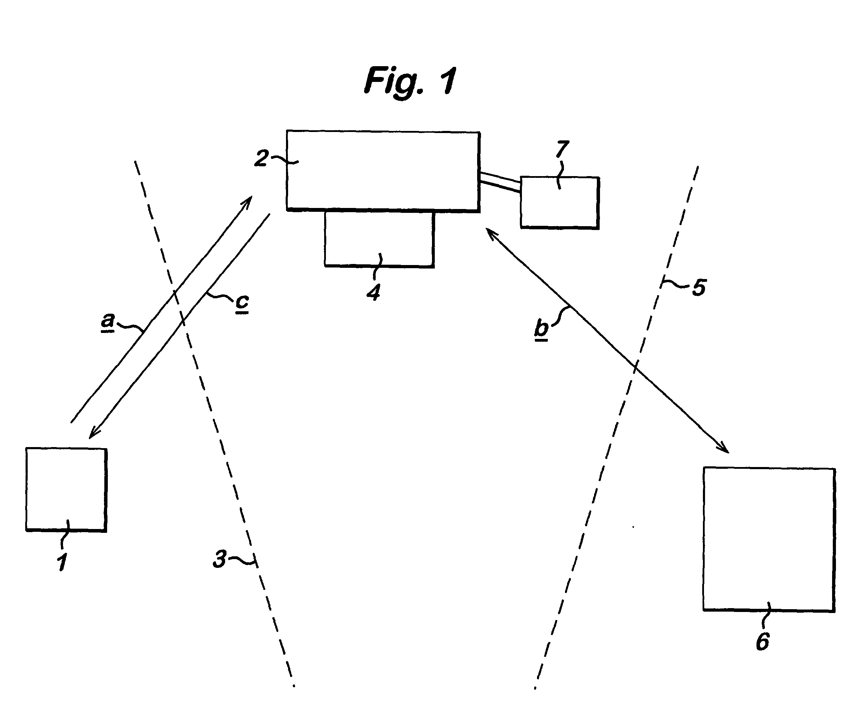

According to Fig. 1 a mobile terminal 1 linked to a mobile network registers with an operating unit, which is established in form of a download center (DL-c.) 2. Preferably this registration occurs together with the submission of a request, indicated by arrow a.

The registration data field preferably consists at least of the following data fields. The mobile-terminal network unique identification (ID). This may be the terminal's dynamic internet protocol (IP) address or another unique identification, as e.g. the phone number assigned to the mobile terminal. A unique identification to allow for the identification of this request in the future.

Upon receipt of the registration an entry is added to a list data structure job 4 in the DL-center 2. The entry consists of the values transported in the data field as described above.

The download center 2 stores the request in a job list 4. Then the request, which preferably is a download from a fixed network, e.g. the Internet 5 is initiated by the download center 2. Therefore the download center 2 contacts a server 6 being part of the Internet 5 by sending out a message, indicated by the arrow b.

In the following the inventive process of getting the data into the DL-center 2 will be described. The data have to be collected from a source being part of the internet world 5. The DL-center 2 arranges a download from this source according to the request. The downloaded data file is cached locally to a storage media 7 of the download center 2.

With the present invention the following scheduling of file-transfer jobs is performed. The actual download to the mobile terminal 1 is initiated in response to the congestion situation of radio cells in the wireless network 3. This of course is under the assumption, that the actual download will be possible within the time regime according to the request. Therefore the download center 2 periodically collects the information on the location information of waiting terminals 1 and on the congestion state in the radio cells.

In accordance with the invention a waiting terminal is defined as a terminal, which has at least one request e.g. download registered which is not yet ongoing.

The congestion state might be taken for those radio cells where there are waiting users in this cell. In a preferred embodiment of the present invention it may be taken for all radio cells of the wireless network.

To get the congestion state it is preferred to do a read access to the operations and maintenance (0&M) database, where the congestion state is available. The data also can be pushed from a software agent in the 0&M to the DL-center 2. Preferably the radio cells actively notify the DL-center 2 on congestion situation themselves. By any means, there has to be a periodical update on congestion from cells. A proprietary protocol can do this. The 0&M agent sends a table, which lists the congestion state in means of percent in intervals of several minutes.

When the initiate-job is called in the DL-center from the scheduler a registered job is started for transmission. Firstly the job is set to a not waiting-status.

According to the present invention the transfer to the mobile terminal, indicated by arrow c in Fig. 1 comprises the following steps. The data has to be sent to the mobile terminal 1. This may either be done by new proprietary services or by means of standard FTP. The DL-center 2 opens a connection to the mobile terminal 1 to transfer the data file stored in the DL-storage 7 to the terminal's 1 internal storage media.

When the final transfer from the DL-center 2 is invoked, this identification is used to check that this transfer has been requested and to keep local information (e.g. destination path, file name, file size, checksum).

Optionally a coded sequence how to get access to a destination address and a value specifying the time in which the download is required are available. If this cannot be achieved an error message is send to notify this to the mobile user.

The access sequence reflects the code to access the storage medium. For most accesses there is no code required at all. If there is, it is usually by user-name and password. The format can be similar to access scripts for telephone dial in software. Here the script waits for an ASCII prompt for e.g. user name, then enters the given user name as given in the script. Then it parses for the password string and continues analogously.

If the access can not be encapsulated in one script- unit to make the access at a later time possible, an immediate download of the file to the cache is performed. Therefore the application has to do the access clearance process and when the stage is reached that the actual file can be accessed it is done so via the DL center 2. Therefore the file gets loaded and cached to local storage media.

With a proprietary FTP-server like agent in the terminal 1 the request identification is used to identify the download data file. The terminal 1 may use some additional means to check that the file delivered is the expected data transfer e.g. file size, checksum. After this the file is accepted and stored at the destination address in the local file system. This destination address either defaults to some standard path, was optionally delivered with the former request or it was memorized and assigned with the request identification and is now retrieved from the mobile terminal 1.

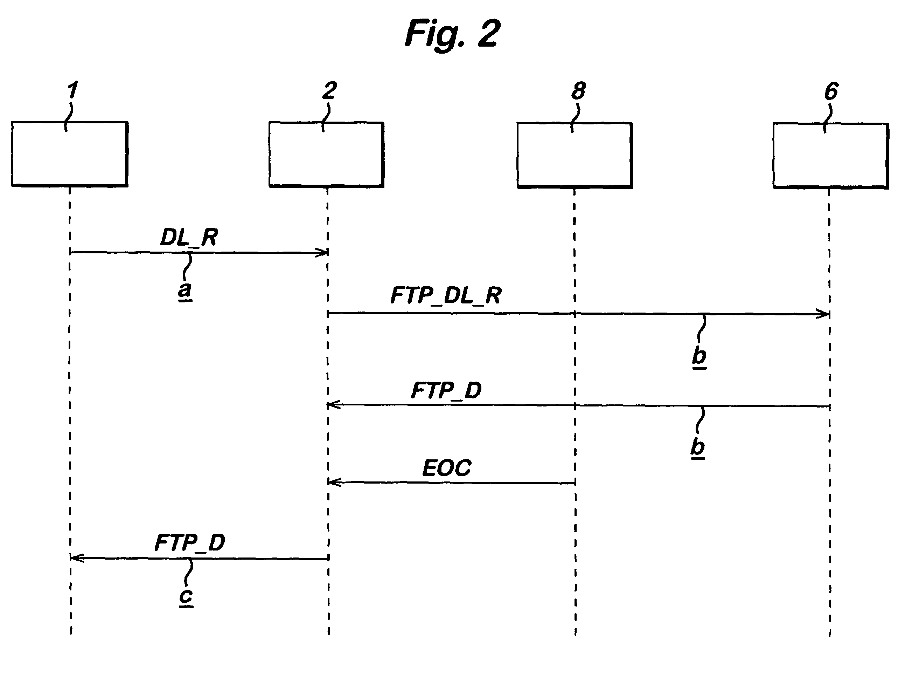

A communication protocol of a preferred explanatory embodiment of the present invention is drafted like a Message-Sequence-Chart (MSC) notation, compare Fig. 2.

In the embodiment according to Fig. 2 the mobile terminal 1 for example requests an e-mail application. Users have subscribed to receive some advertisements by e-mail, which may contain a link to media files, as e.g. mp3 files with sample songs from new music albums or the like. The user asks for DL-center 2 for support when an attachment to a message to be downloaded is larger than for instance 100 kilobyte. A browser is also configured to automatically load the messages, but leaves the attachments on the server 6 until the user requests them. The terminal 1 can be attached to the IP-packet network with a dynamic IP-address.

The user reads a message, finds the described mp3 data interesting and decides to download it. The song is given as a hyperlink reference. Because the size of the file is larger than the value given above the application asks the user in a dialog box, if he wants to have the file loaded in the background.

For cost issues the user accepts to receive the file sometimes later. The following packet is sent by the browser to the DL-center 2. The IP-address of the DL-center 2 is announced by the telecom operator and was entered by the user into the configuration of the mail client.

The first field is a tag which tells the DL-center 2 this is a new request to store, compare arrow a in Fig. 2. The rest of the variables contain the data as explained before.

It has to be noticed, that the user got a dynamic IP-address when he logged into the system as data user. This is known to the application and therefore used to identify the mobile 1. If the IP-address can change during operation this user identification tag must be replaced by another network unique identification tag.

The download request, is posted (a) to the DL-center 2. The DL-center 2 reads the request and immediately performs the FTP request in order to utilize caching of the data, see Fig 2., FTP_DL_R and b. At sometime the download will be finished, compare FTP_D in Fig. 2. The DL-center 2 does nothing but wait for either other requests, or for an indication that the busy-hour situation is over for some radio cells of wireless network 3.

At any point in the future there is an end-of-congestion (EOC) signal from the congestion monitor 8 indicating that some cell is running idle. Because the user under consideration is currently located in this cell, the download is initiated, here depicted as FTP_data or C.

The invention is not limited to the exemplary embodiments described, which can be modified in multifarious ways. For example it is possible to store the request from the mobile terminal but not immediately execute it. Then the request as described above will be performed directly before the transfer to the mobile is initiated.

It is evident, furthermore, that the processing unit or download center can also be part of the wireless network, acting there as central entity that registers requests and initiates them. A mobile terminal accessible by a wireless network can in the sense of the present invention also be a laptop computer, a digital camera with data transfer devices, a facsimile machine, a mobile phone or various types of PDAs. Also technically equivalent devices are within the spirit of the present invention.

Finally and to conclude, it is evident that the individual features of the invention can also be used in combinations other than those illustrated and described.

## Claims

1. Method for scheduling information transfers between an accessible local element (1) linked to a wireless network (3) and a fixed network (5) comprising the following steps:
- directing an information request from the local element (1) to an operating unit (2) interfacing the wireless network (3) and the fixed network (5)
- storing the request in the operating unit (2)
- executing the request depending on a congestion state of the wireless network (3) **characterized in that** congestion information is collected either from all radio cells of the wireless network (3) or from radio cells of the wireless network (3) from which the request was obtained, and the operating unit (2) periodically collects location information of the local element (1) waiting for the requested information.

2. Method according to claim 1, **characterized in that** the step of executing the request includes
- directing the request to the fixed network (5) to be operated on and
- sending to the local element (1) the information according to the request obtained from the fixed network (5) depending on the congestion state in the wireless network (3).

3. Method according to claim 1 or 2, **characterized by**
- storing the information according to the request obtained from the fixed network (5) in the operating unit (2) before forwarding said information to the local element (1) in the wireless network (3) and/or
- storing the request obtained from the local element (1) in the operating unit (2) before processing the request any further and/or
- sending the information according to the request obtained from the fixed network (5) to the local element (1) when the congestion state is below a value allowing an undisturbed data transfer.

4. Method according to one of the preceding claims, **characterized in that** the operating unit (2) periodically collects information on the congestion state of the wireless network (3).

5. Method according to one of the preceding claims, **characterized in that**
- identification information concerning the mobile terminal (1) is sent with the request to the operating unit (2) and **in that**
- the identification information contains:
- an identification of the mobile terminal (1) and/or
- a transfer protocol address for the requested data and/or
- a specification number for the request and/or
- time-limit information data and/or **in that**
- the mobile terminal (1) submits an authentication.

6. Method according to one of the preceding claims, **characterized in that** the operating unit (2) sends (b) an authentication to a contacting unit of the fixed network (5,6) and/or **in that** the request (a) requests downloading of data (b) from the fixed network (5) and transferring said data to the wireless network (3).

## Patentansprüche

1. Verfahren zur Planung von Informationsübertragungen zwischen einem zugänglichen örtlichen Element (1), das mit einem drahtlosen Netz (3) verknüpft ist, und einem Festnetz (5), mit folgenden Schritten:
- Leiten einer Informationsanforderung von dem örtlichen Element (1) zu einer das drahtlose Netz (3) und das Festnetz (5) zusammenschaltenden Betriebseinheit (2),
- Speichern der Anforderung in der Betriebseinheit (2)
- Ausführen der Anforderung in Abhängigkeit von einem Belegungszustand des drahtlosen Netzes (3), **dadurch gekennzeichnet, daß** Belegungsinformationen entweder von allen Funkzellen des drahtlosen Netzes (3) oder von Funkzellen des drahtlosen Netzes (3), von denen die Anforderung erhalten wurde, eingesammelt werden und die Betriebseinheit (2) periodisch Standortsinformationen des örtlichen Elements (1) einsammelt, das auf die angeforderten Informationen wartet.

2. Verfahren nach Anspruch 1, **dadurch gekennzeichnet, daß** der Schritt des Ausführens der Anforderung folgendes umfaßt:
- Leiten der Anforderung an das Festnetz (5) zur Bearbeitung und
- Senden der Informationen zum örtlichen Element (1) entsprechend der vom Festnetz (5) erhaltenen Anforderung in Abhängigkeit von dem Belegungszustand im drahtlosen Netz (3).

3. Verfahren nach Anspruch 1 oder 2, **gekennzeichnet durch**
- Speichern der Informationen entsprechend der vom Festnetz (5) erhaltenen Anforderung in der Betriebseinheit (2) vor Weiterleitung der Informationen zum örtlichen Element (1) im drahtlosen Netz (3) und/oder
- Speichern von vom örtlichen Netz (1) erhaltenen Anforderung in der Betriebseinheit (2) vor Weiterverarbeitung der Anforderung und/oder
- Senden der Informationen entsprechend der vom Festnetz (5) erhaltenen Anforderung zum örtlichen Element (1) wenn der Belegungszustand unter einem Wert liegt, der eine ungestörte Datenübertragung erlaubt.

4. Verfahren nach einem der vorhergehenden Ansprüche, **dadurch gekennzeichnet, daß** die Betriebseinheit (2) periodisch Informationen über den Belegungszustand des drahtlosen Netzes (3) einsammelt.

5. Verfahren nach einem der vorhergehenden Ansprüche, **dadurch gekennzeichnet, daß**
- Identifikationsinformationen betreffs des mobilen Endgeräts (1) mit der Anforderung zu Betriebseinheit (2) gesendet werden, und daß
- die Identifikationsinformationen folgendes enthalten:
- eine Identifikation des mobilen Endgeräts (1) und/oder
- eine Übertragungsprotokolladresse für die angeforderten Daten und/oder
- eine Spezifikation, für die Anforderung und/oder
- Zeitgrenzeninformationsdaten und/oder daß
- das mobile Endgerät (1) eine Authentifizierung einreicht.

6. Verfahren nach einem der vorhergehenden Ansprüche, **dadurch gekennzeichnet, daß** die Betriebseinheit (2) eine Authentifizierung zu einer Kontakteinheit des Festnetzes (5, 6) sendet (b) und/oder daß die Anforderung (a) das Herunterladen von Daten (b) vom Festnetz (5) anfordert und übertragen der Daten zum drahtlosen Netz (3).

## Revendications

1. Méthode de planification de transferts d'informations entre un élément local accessible (1) relié à un réseau sans fil (3) et un réseau fixe (5), comprenant les étapes suivantes :
- l'acheminement d'une demande d'informations de l'élément local (1) à une unité d'exploitation (2) qui réalise une interface entre le réseau sans fil (3) et le réseau fixe (5)
- l'enregistremenet de la demande dans l'unité d'exploitation (2)
- l'exécution de la demande en fonction d'un état d'encombrement du réseau sans fil (3)
**caractérisée en ce que** des informations relatives à l'encombrement sont collectées soit auprès de l'ensemble des cellules radio du réseau sans fil (3) ou auprès de cellules radio du réseau sans fil (3) auprès desquelles la demande a été obtenue, et l'unité d'exploitation (2) collecte périodiquement des informations relatives à l'emplacement de l'élément local (1) qui attend les informations demandées.

2. Méthode selon la revendication 1, **caractérisée en ce que** l'étape d'exécution de la demande comporte :
- l'acheminement de la demande jusqu'au réseau fixe (5) pour y être exploitée, et
- l'envoi à l'élément local (1) des informations conformément à la demande obtenue auprès du réseau fixe (5) en fonction de l'état d'encombrement dans le réseau sans fil (3).

3. Méthode selon la revendication 1 ou 2, **caractérisée par** :
- l'enregistrement dans l'unité d'exploitation (2) des informations obtenues auprès du réseau fixe (5) avant de transmettre lesdites informations à l'élément local (1) dans le réseau sans fil (3) et/ou
- l'enregistrement de la demande obtenue auprès de l'élément local (1) dans l'unité d'exploitation (2) avant tout traitement supplémentaire dé la demande, et/ou
- l'envoi à l'élément local (1) des informations conformément à la demande obtenue auprès du réseau fixe (5) lorsque l'état d'encombrement est inférieur à une valeur permettant un transfert de données sans perturbations.

4. Méthode selon l'une des revendications précédentes, **caractérisée en ce que** l'unité d'exploitation (2) collecte périodiquement des informations concernant l'état d'encombrement du réseau sans fil (3).

5. Méthode selon l'une des revendications précédentes, **caractérisée en ce que** :
- des informations d'identification concernant le terminal mobile (1) sont envoyées à l'unité d'exploitation (2) conjointement avec la demande, et **en ce que** :
- les informations d'identification contiennent :
- une identification du terminal mobile (1) et/ou
- une adresse de protocole de transfert pour les données demandées, et/ou
- un numéro de spécification pour la demande, et/ou
- des données d'informations concernant un délai, et/ou **en ce que**
- le terminal mobile (1) soumet une authentification.

6. Méthode selon l'une des revendications précédentes, **caractérisée en ce que** l'unité d'exploitation (2) envoie (b) une authentification à une unité de contact du réseau fixe (5, 6), et/ou **en ce que** la demande (a) demande le téléchargement de données (b) du réseau fixe (5) et le transfert desdites données au réseau sans fil (3).
